# EUROPEAN PATENT APPLICATION

(11) **EP 2 905 175 A1**
(43) Date of publication of application: **12.08.2015**
(21) Application number: 13843731.4
(22) Date of filing: 01.10.2013
(51) Int. Cl.: B60Q 3/02

(54) **VEHICLE-INTERIOR ILLUMINATION DEVICE**

(30) Priority: 04.10.2012 JP 2012222415
(71) Applicant: Yazaki Corporation, Tokyo 108-0073 (JP)
(72) Inventor: OBA, Yasushi, Makinohara-shi Shizuoka 421-0407 (JP); SUGIMOTO, Terumitsu, Makinohara-shi Shizuoka 421-0407 (JP)
(74) Representative: Hoffmann Eitle
(86) International application number: PCT/JP2013/076695
(87) International publication number: WO 2014/054636

(57) **Abstract**

Each of reading lamps (25, 27, 29, and 31) serving for second row seats (7 and 9) and a third row seat (11) of a vehicle includes light sources (33a, 33b, 33c, and 33d) spaced in a front-rear direction of the vehicle. The lighting pattern of the light sources (33a, 33b, 33c, and 33d) which includes the respective intensities thereof is determined in accordance with the sliding position of the corresponding seat in the front-rear direction of the vehicle. Accordingly, the light sources (33a, 33b, 33c, and 33d) are appropriately turned on so that light from the reading lamp may sufficiently reach an occupant on the seat regardless of whether the sliding position of a seat is a forward position or a rearward position, and thereby the occupant can be appropriately lit in accordance with a change in the seat position.

## Description

### [TECHNICAL FIELD]

The present invention relates to a vehicle interior lighting system for lighting occupants on seats in a vehicle.

### [BACKGROUND ART]

Some vehicles have lighting provided to an upper portion of a vehicle cabin to light occupants on seats. In recent years, there have been proposals of a lighting system devised to provide illuminating light over a wide area by using a light diffusion member so as to widen the illumination target or improve lighting quality (e.g. , PTLs 1 and 2).

### [CITATION LIST]

### [PATENT LITERATURE]

### [PTL 1]

Japanese Unexamined Patent Application Publication No. 2012-101726
Japanese Unexamined Patent Application Publication No. 2009-214677

### [SUMMARY OF INVENTION]

### [TECHNICAL PROBLEM]

In recent years, in order to improve interior comfort, some vehicles called minivans, in particular, have been designed such that not only front seats (driver seat and front passenger seat) but also seats other than the front seats can slide in a front-rear direction with a long stroke. In the case where the seat positions can be largely changed in this way, there is the following concern: even if an area illuminated by illuminating light is widened using a light diffusion member, there is a seat position at which light of illumination cannot sufficiently reach an occupant on a seat and at which the occupant is in a shaded area out of the illuminated area.

The present invention has been made in light of the above-described circumstances, and an object of the present invention is to provide a vehicle interior lighting system which can light an occupant on a seat appropriately in accordance with a change in a seat position.

### [SOLUTION TO PROBLEM]

A first aspect of the present invention provides a vehicle interior lighting system for lighting an occupant on a seat of a vehicle, including: multiple light sources disposed above the seat of the vehicle; and turned-on light source determination means for determining which light source of the multiple light sources to turn on, based on a position of the seat.

According to the first aspect of the present invention, which light source of the plurality of light sources disposed above the seat to turn on is determined based on the position of the seat. Accordingly, regardless of whether the position of the occupant based on the position of the seat is a forward position or a rearward position in the vehicle, the light sources can be appropriately turned on so that light of illumination may sufficiently reach the occupant on the seat. Thus, the occupant can be appropriately lit in accordance with a change in the seat position.

In a second aspect of the present invention, the seat is configured to be slidable in a front-rear direction of the vehicle, the multiple light sources are disposed along the front-rear direction of the vehicle, and the turned-on light source determination means determines which light source of the multiple light sources to turn on, based on a sliding position of the seat in the front-rear direction of the vehicle.

According to the second aspect of the present invention, when the position of the occupant moves in the front-rear direction of the vehicle in accordance with the sliding position of the seat in the front-rear direction of the vehicle, the position of the occupant relative to each of the light sources greatly changes. Accordingly, by determining which of the light sources to turn on based on the sliding position of the seat, the light sources can be appropriately turned on so that light of illumination sufficiently reach the occupant on the seat. Thus, the occupant can be appropriately lit in accordance with a change in the seat position.

A third aspect of the present invention further includes intensity determination means for determining an intensity of the light source to be turned on, based on a position of the occupant on the seat relative to each of the light sources in the front-rear direction of the vehicle.

According to the third aspect of the present invention, the degree of the intensity of the lighting to be turned on is determined in accordance with the position of the seat relative to the lighting to be turned on in the front-rear direction of the vehicle. Accordingly, a light source close to the seat can be lit at a high intensity, and a light source far from the seat can be lit at a low intensity. Thus, the occupant on the seat can be lit at an appropriate brightness in accordance with the seat position.

A fourth aspect of the present invention further includes a board disposed in an upper portion of the vehicle, the board including a connector and the light sources mounted thereon, the connector being equipped with a control circuit configured to control turning on of each of the light sources, and a multiplex communication line routed in a pillar of the vehicle and connected to the connector to transmit a control signal for controlling the turning on of each of the light sources to the control circuit.

According to the fourth aspect of the present invention, instead of a plurality of signal lines connected to the light sources, one multiplex communication line is routed through a pillar through which a signal line routed between an upper portion and a lower portion of the vehicle is passed. Accordingly, a routing space in the pillar can be effectively utilized.

### [ADVANTAGEOUS EFFECTS OF INVENTION]

According to the present invention, an occupant on a seat can be appropriately lit in accordance with a change in a seat position.

### [BRIEF DESCRIPTION OF DRAWINGS]

[FIG. 1] Fig. 1 is a view for explaining an arrangement of a vehicle interior lighting system according to one embodiment of the present invention.
[FIG. 2] Fig. 2 is an explanatory diagram showing the relative positional relationship between light sources and a seat shown in Fig. 1.
[FIG. 3] Fig. 3 is a block diagram schematically showing the configuration of a system for controlling map lamps and reading lamps shown in Fig. 1.
[FIG. 4] Fig. 4 is an explanatory diagram showing a wiring layout of boards of the reading lamps of Fig. 3 and a lighting ECU.
[FIG. 5A] Fig. 5A is an explanatory diagram showing one example of the sliding position of a seat in the front-rear direction of a vehicle and a lighting pattern of the light sources, which is defined in a table stored on a hard disk of the lighting ECU of Fig. 3.
[FIG. 5B] Fig. 5B is an explanatory diagram showing one example of the sliding position of a seat in the front-rear direction of a vehicle and a lighting pattern of the light sources, which is defined in a table stored on a hard disk of the lighting ECU of Fig. 3.
[FIG. 6] Fig. 6 is a flowchart showing a procedure for controlling the turning on of a reading lamp in accordance with the sliding position of a seat, which is executed by a CPU of the lighting ECU of Fig. 3 in accordance with a program stored in a ROM.

### [DESCRIPTION OF EMBODIMENTS]

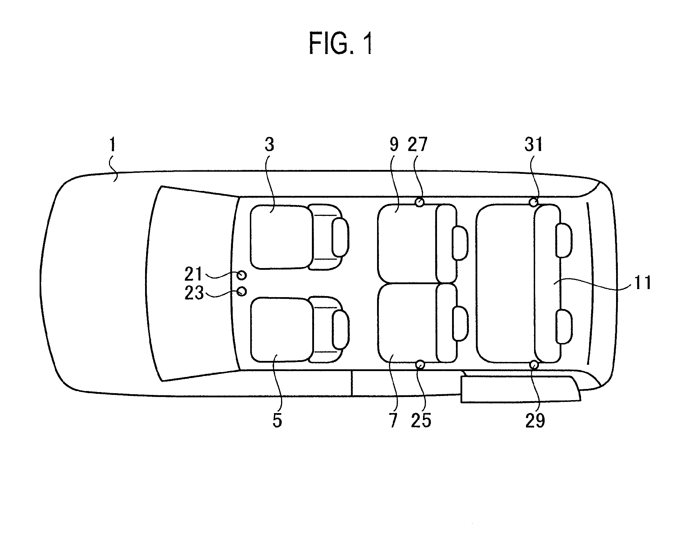

A vehicle interior lighting system according to an embodiment of the present invention will be described below with reference to the drawings. Fig. 1 is a view for explaining an arrangement of a vehicle interior lighting system according to one embodiment of the present invention. It should be noted that a front, rear, right, and left of a vehicle are defined based on the direction of travel of the vehicle.

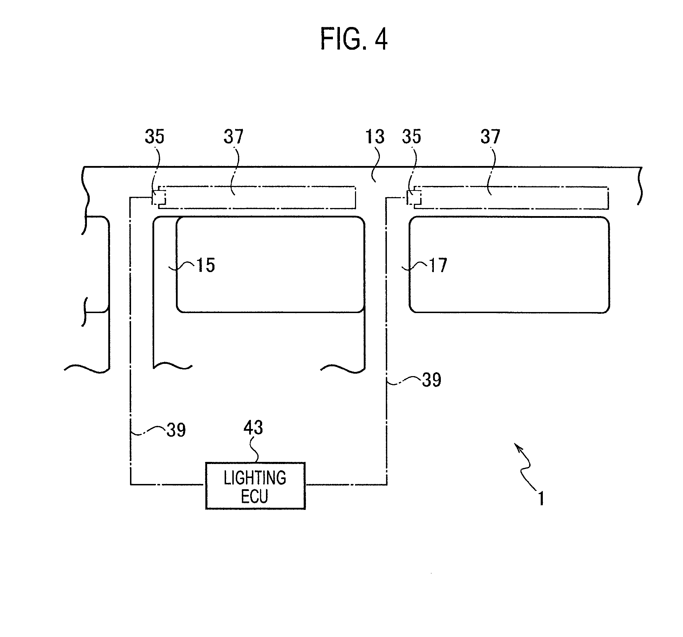

As shown in Fig. 1, a vehicle 1 is provided with map lamps 21 and 23 at a center of a front portion of a roof liner 13 therein (above vehicle seats, see Fig. 4), which correspond to a driver seat 3 and a front passenger seat 5, respectively. The vehicle 1 is provided with reading lamps 25 and 29 on a left side of the roof liner 13, which correspond to a second row seat 7 and a third row seat 11, respectively. The vehicle 1 is provided with reading lamps 27 and 31 on a right side of the roof liner 13, which correspond to a second row seat 9 and the third row seat 11, respectively. It should be noted that though the third row seat 11 is a three-seater seat, the seat 11 only has the reading lamps 29 and 31 at two opposite sides. The reading lamps 25 to 31 and a system for controlling the turning on thereof constitute the vehicle interior lighting system.

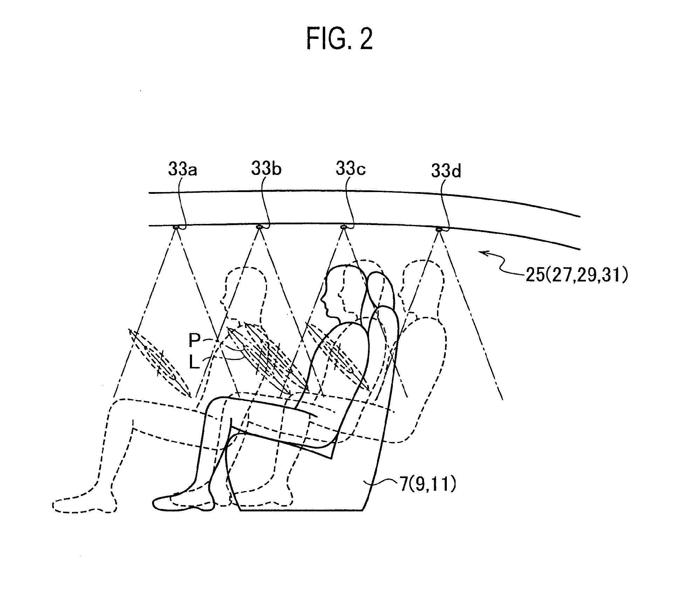

As shown in Fig. 2, each of the reading lamps 25 to 31 includes four light sources 33a to 33d disposed to be spaced in the front-rear direction such that the light sources 33a to 33d collectively cover a sliding range of the seat 7, 9, or 11 in the front-rear direction of the vehicle 1 by individually covering respective portions of the sliding range. In this embodiment, each of the light sources 33a to 33d includes three LED chips, R, G, and B, and can generate light of any color by adjusting the respective intensities of the LED chips.

It should be noted that each double circle in Fig. 2 represents an eye point P (range within which the point of gaze moves) and an eye range L (range within which the eye point P moves in accordance with passenger's physical size) at one of various sliding positions of the seat 7, 9, or 11 when a passenger seated on the seat is reading.

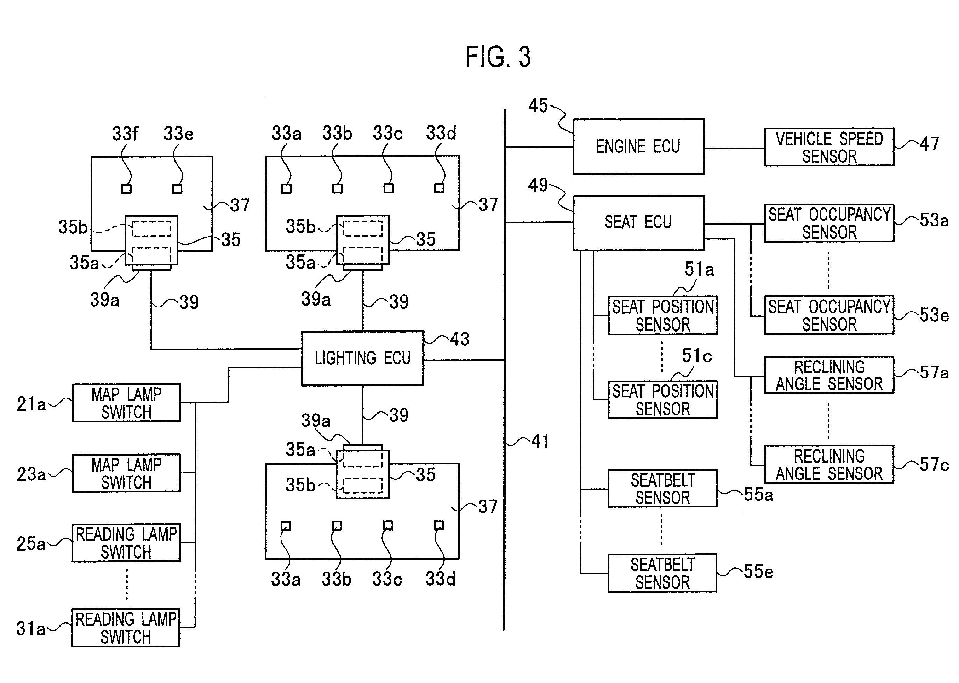

Next, an outline of the configuration of the system for controlling the reading lamps 25 to 31 and the map lamps 21 and 23 will be described with reference to Fig. 3. In this embodiment, the light sources 33a to 33d of each of the reading lamps 25 to 31 are mounted on a circuit board 37 (board) together with a controller-equipped connector 35 (connector). The controller-equipped connector 35 includes a female connector portion 35a to which a male connector portion 39a of a multiplex communication line 39 can be connected and a controller 35b (control circuit) formed by, for example, a one-chip microcomputer.

It should be noted that similar to the light sources 33a to 33d of each of the reading lamps 25 to 31, each of the map lamps 21 and 23 also includes light sources 33e and 33f, each of which includes three LED chips, R, G, and B, and can generate light of any color. The light sources 33e and 33f of each of the map lamps 21 and 23 are also mounted on a circuit board 37 together with a controller-equipped connector 35.

The controller 35b is connected to the light sources 33a to 33d or the light sources 33e and 33f through a conductive pattern (not shown) of the circuit board 37. The controller 35b controls whether each of the light sources 33a to 33d of any one of the reading lamps 25 to 31 or each of the light sources 33e and 33f of any one of the map lamps 21 and 23 is turned on or off, based on a control signal inputted from a lighting ECU (Electronic Control Unit) 43 through the multiplex communication line 39.

As shown in Fig. 4, each of the circuit boards 37 is disposed on the roof liner 13 of the vehicle 1. The multiplex communication lines 39 connected from the lighting ECU 43 to the controller-equipped connectors 35 on the circuit boards 37 are routed through the insides of pillars 15 and 17 of the vehicle 1.

Since cables in the pillars 15 and 17 are the multiplex communication lines 39, the number of cables can be reduced in this embodiment compared to that in the case where respective individual cables connected to the light sources 33a to 33d are passed through the insides of the pillars 15 and 17. Accordingly, finite spaces in the pillars 15 and 17, through which many other cables are passed, can be effectively utilized.

As shown in Fig. 3, the lighting ECU 43 periodically receives data on the speed of the vehicle 1 measured by a vehicle speed sensor 47 from an engine ECU 45 through an on-board LAN 41. The lighting ECU 43 periodically receives data on sliding positions of the second row seats 7 and 9 and the third row seat 11 in the front-rear direction detected by seat position sensors 51a to 51c from a seat ECU 49 through the on-board LAN 41. Data on the sliding positions of the seats 7, 9, and 11 may be inputted when the lighting ECU 43 issues a request to the seat ECU 49.

The lighting ECU 43 receives data on occupancy conditions of the seats 7 and 9 and the seat 11 (for three passengers) detected by seat occupancy sensors 53a to 53e and data on latch conditions of seatbelts on the seats 7 and 9 and the seat 11 (for three passengers) detected by seatbelt sensors 55a to 55e, from the seat ECU 49 through the on-board LAN 41.

Map lamp switches 21a and 23a for switching the map lamps 21 and 23 on or off and reading lamp switches 25a to 31a for switching the reading lamps 25 to 31 on or off are connected to the lighting ECU 43 through interfaces (not shown).

The lighting ECU 43 controls whether each of the map lamps 21 and 23 and the reading lamps 25 to 31 is turned on or off, based on inputs from the above-described components connected thereto. In particular, in this embodiment, the lighting ECU 43 controls whether each of the light sources 33a to 33d of each of the reading lamps 25 to 31 is turned on or off, based on data on the respective sliding positions of the seats 7, 9, and 11 in the front-rear direction from the seat position sensors 51a to 51c received from the seat ECU 49 and on whether each of the reading lamp switches 25a to 31a is on or off.

The lighting ECU 43 includes a CPU, a RAM, a ROM, a hard disk, and the like (all of them are not shown). The CPU controls whether each of the light sources 33a to 33d of each of the reading lamps 25 to 31 is turned on or off, in accordance with a program stored in the ROM with reference to a table stored on the hard disk using the RAM as a work area.

The table stored on the hard disk defines sliding positions for each of the seats 7, 9, and 11 in the front-rear direction and respective corresponding patterns, each of which includes whether each of the light sources 33a to 33d is turned on (including intensity = brightness) or off.

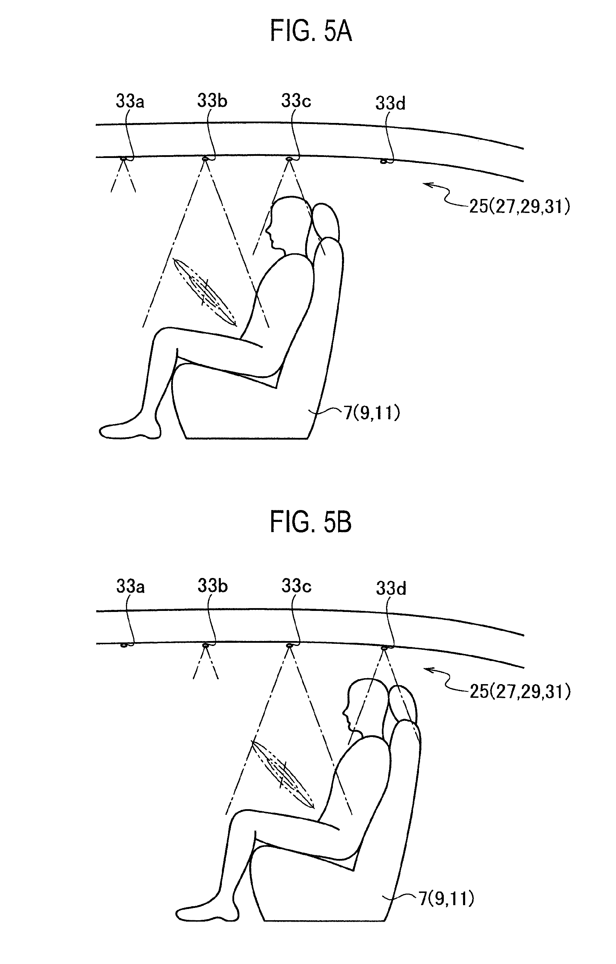

For example, as shown in Fig. 5A, in a lighting pattern for the case where the seat 7, 9, or 11 is at an approximately central sliding position in the front-rear direction, the second light source 33b from the front is turned on with a duty cycle of 100%. Further, the first light source 33a from the front is turned on with a duty cycle of 20%, and the third light source 33c from the front is turned on with a duty cycle of 50%. The last light source 33d is turned off.

As shown in Fig. 5B, in a lighting pattern for the case where the seat 7, 9, or 11 is at an approximately central sliding position in the front-rear direction, the third light source 33c from the front is turned on with a duty cycle of 100%. Further, the second light source 33b from the front is turned on with a duty cycle of 20%, and the last light source 33d is turned on with a duty cycle of 50%. The first light source 33a from the front is turned off.

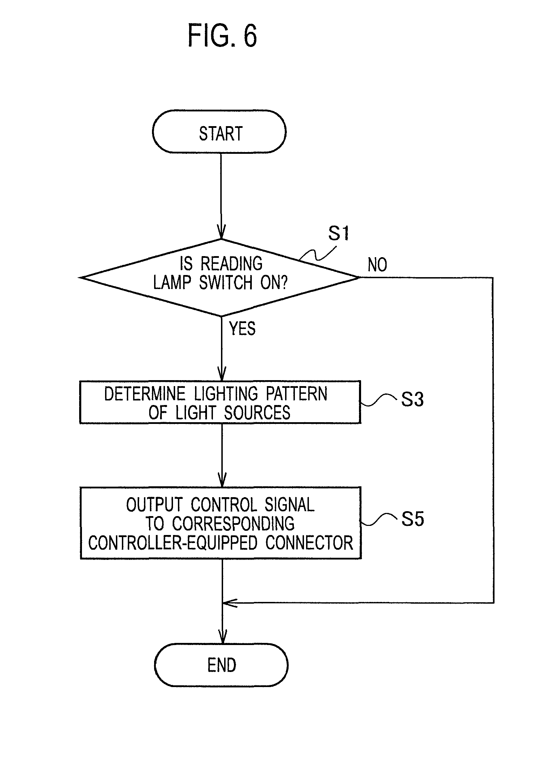

Next, a procedure for controlling the turning on of each of the reading lamps 25 to 31 in accordance with the sliding position of the seat 7, 9, or 11 in the front-rear direction which is executed in accordance with the program stored in the ROM by the CPU of the lighting ECU 43 will be described with reference to Fig. 6. The CPU repeatedly executes control in accordance with the procedure shown in Fig. 6 at a predetermined frequency.

First, the CPU determines whether at least one of the reading lamp switches 25a to 31a corresponding to the reading lamps 25 to 31, respectively, is on or not (step S1). If none of the reading lamp switches 25a to 31a is on (NO in step S1), a sequence of processing is ended.

Meanwhile, if at least one of the reading lamp switches 25a to 31a is on (YES in step S1), the CPU determines the lighting pattern of the light sources 33a to 33d based on the sliding position of the seat corresponding to the reading lamp for which the reading lamp switch is on, with reference to the table on the hard disk (step S3).

Further, the CPU outputs a control signal for turning each of the light sources 33a to 33d on (off) in the determined lighting pattern to the controller 35b of the controller-equipped connector 35 of the reading lamp for which the reading lamp switch is on, through the multiplex communication lines 39 (step S5), and then ends a sequence of processing.

In this embodiment, step S3 in the flowchart of Fig. 6 is a step corresponding to light source determination means and intensity determination means.

As described above, in this embodiment, the four light sources 33a to 33d spaced in the front-rear direction are provided in each of the reading lamps 25 to 31 serving for the second row seats 7 and 9 and the third row seat 11 of the vehicle 1, respectively, and the lighting pattern (including intensity) of the light sources 33a to 33d is determined in accordance with the sliding position of each of the seats 7, 9, and 11 in the front-rear direction.

Accordingly, regardless of whether the sliding position of each of the seats 7, 9, and 11 is a forward position or a rearward position, occupants on the seats 7, 9, and 11 can be appropriately lit in accordance with changes in the seat positions by appropriately turning the light sources 33a to 33d on so that light from the reading lamps 25 to 31 may sufficiently reach the occupants on the seats 7, 9, and 11, respectively. Moreover, the occupants on the seats 7, 9, and 11 can be lit at appropriate brightnesses in accordance with the seat positions by turning on the light sources close to the seats 7, 9, and 11 at high intensities and turning on the light sources far from the seats 7, 9, and 11 at low intensities (including turning off).

It should be noted that the multiplex communication lines 39 which connect the lighting ECU 43 to the respective controller-equipped connectors 35 on the circuit boards 37 of the reading lamps 25 to 31 do not need to be routed in the pillars 15 and 17 of the vehicle 1. Moreover, changing the intensities (ON duty cycles) of the light sources 33a to 33d in accordance with the sliding position of each of the seats 7, 9, and 11 in the front-rear direction may be omitted.

In this embodiment, the light sources 33a to 33d of each of the reading lamps 25 to 31 or the light sources 33e and 33f of each of the map lamps 21 and 23 are mounted on one circuit board 37 to be connected to the lighting ECU 43 with the controller-equipped connector 35. However, the light sources 33a to 33f may be mounted on respective individual circuit boards 37 to be individually connected directly to the lighting ECU 43.

In this embodiment, the lighting pattern of the light sources 33a to 33d in accordance with the position of the occupant on the seat 7, 9, or 11 in the front-rear direction is determined based on the sliding position of the seat 7, 9, or 11 in the front-rear direction detected by the seat position sensor 51a with reference to the table on the hard disk. However, as shown in Fig. 3, the lighting pattern of the light sources 33a to 33d in accordance with the position of the occupant on the seat 7, 9, or 11 in the front-rear direction may be determined based on the reclining angle of the seat 7, 9, or 11 detected by the corresponding one of the reclining angle sensors 57a to 57c connected to the seat ECU 49 with reference to the table on the hard disk.

### [INDUSTRIAL APPLICABILITY]

The present invention is remarkably useful in lighting an occupant on a seat in a vehicle, which is slidable in the front-rear direction of the vehicle, with light sources disposed above the seat.

### [REFERENCE SIGNS LIST]

- 1: vehicle
- 3: driver seat
- 5: front passenger seat
- 7, 9, 11: seat
- 13: roof liner (above vehicle seats)
- 15, 17: pillar
- 21, 23: map lamp
- 21a, 23a: map lamp switch
- 25 to 31: reading lamp
- 25a to 31a: reading lamp switch
- 33a to 33f: light source
- 35: controller-equipped connector (connector)
- 35a: female connector portion
- 35b: controller (control circuit)
- 37: circuit board
- 39: multiplex communication line
- 39a: male connector
- 41: on-board LAN
- 43: lighting ECU (turned-on light source determination means, intensity determination means)
- 45: engine ECU
- 47: vehicle speed sensor
- 49: seat ECU
- 51a to 51c: seat position sensor
- 53a to 53e: seat occupancy sensor
- 55a to 55e: seatbelt sensor
- 57a to 57c: reclining angle sensor
- L: eye range
- P: eye point

## Claims

1. A vehicle interior lighting system for lighting an occupant on a seat of a vehicle, comprising:
a plurality of light sources disposed above the seat of the vehicle; and
turned-on light source determination means for determining which light source of the plurality of light sources to turn on, based on a position of the seat.

2. The vehicle interior lighting system according to claim 1,
wherein the seat is configured to be slidable in a front-rear direction of the vehicle,
the plurality of light sources is disposed along the front-rear direction of the vehicle, and
the turned-on light source determination means determines which light source of the plurality of light sources to turn on, based on a sliding position of the seat in the front-rear direction of the vehicle.

3. The vehicle interior lighting system according to claim 1 or 2, further comprising intensity determination means for determining an intensity of the light source to be turned on, based on a position of the occupant on the seat relative to each of the light sources in the front-rear direction of the vehicle.

4. The vehicle interior lighting system according to any one of claims 1, 2, and 3, further comprising:
a board disposed in an upper portion of the vehicle, the board comprising a connector and the light sources mounted thereon, the connector being equipped with a control circuit configured to control turning on of each of the light sources; and
a multiplex communication line routed in a pillar of the vehicle and connected to the connector to transmit a control signal for controlling the turning on of each of the light sources to the control circuit.
